# EUROPÄISCHE PATENTANMELDUNG

(11) **EP 1 394 275 A1**
(43) Veröffentlichungstag der Anmeldung: **03.03.2004**
(21) Anmeldenummer: 03450181.7
(22) Anmeldetag: 05.08.2003
(51) Int. Cl.: C21B 3/06, C21B 3/08, C04B 5/00

(54) **Verfahren zur Abreicherung von Alkalien in oxidischen Schmelzen**

(30) Priorität: 14.08.2002 AT 12322002
(71) Anmelder: Tribovent Verfahrensentwicklung GmbH, 6700 Lorüns (AT)
(72) Erfinder: Edlinger, Alfred, 6780 Bartholomäberg (AT)
(74) Vertreter: Haffner, Thomas M.

(57) **Zusammenfassung**

Bei einem Verfahren zur Abreicherung von Alkalien und/oder Schwermetallen in oxidischen Schmelzen, bei welchen die Schmelzen, wie z.B. schmelzflüssige Müllverbrennungsschlacken, Stahlschlacken und/oder Hochofenschlacken versprüht und anschließend gekühlt werden, wird die Temperatur der flüssigen Schmelzen am Austritt einer Sprühdüse wenigstens 50°C, vorzugsweise etwa 150°C über dem Liquidus-Temperatur-Bereich der zu versprühenden Schmelzen eingestellt, wobei die im Anschluss an das Versprühen erstarrten Partikel einem mechanischen Trennverfahren zur Trennung von faserartigen und tropfen- bzw. kugelförmigen Strukturen unterworfen werden.

## Beschreibung

Die Erfindung bezieht sich auf ein Verfahren zur Abreicherung von Alkalien und/oder Schwermetallen in oxidischen Schmelzen, bei welchen die Schmelzen, wie z.B. schmelzflüssige Müllverbrennungsschlacken, Stahlschlackeh und/oder Hochofen-schlacken versprüht und anschließend gekühlt werden.

Durch Versprühen und anschließendes Kühlen von oxidischen Schmelzen läßt sich eine Reihe von wiederverwertbaren Produkten erzielen, welche je nach chemischer Zusammensetzung für unterschiedliche Zwecke geeignet erscheinen. Ein wesentliches Einteilungskriterium für oxidische Schmelzen ist zumeist die sogenannte Basizität (CaO/SiO₂), wobei dieses Verhältnis von Calciumoxid zu Siliziumdioxid als Schlackenbasizität definiert wird. Stahlschlacken, beispielsweise LD-Schlacken weisen üblicherweise eine hohe Basizität auf, welche nahe 3 liegen kann. Derartige Stahlschlacken weisen zumeist auch relativ hohe Eisenoxidgehalte im Ausmaß von 20 bis 25 Gew.% und einen relativ geringen Al₂O₃-Gehalt auf. Derartige hoch basische Schlacken erstarren beim Granulieren zu mehr oder minder großen Kugeln, wobei bedingt durch die Belastung derartiger Schlacken, beispielsweise durch Schwermetalle oder andere Verunreinigungen, eine unmittelbare Weiterverarbeitung bzw. Verwendung zumeist nicht gelingt. Es wurde daher bereits vorgeschlagen flüssige Schlacken durch entsprechende Reinigungsschritte von störenden Begleitmetallen zu reinigen, wobei derartige Verfahren vor allem auch für Müllverbrennungsschlacken bereits entwickelt wurden. Müllverbrennungsschlacken, wie sie durch vollständige Oxidation vom Haushaltsmüll oder von beim Shreddern von Autos anfallenden Shredderleichtfraktionen (RESH) entstehen, enthalten üblicherweise SiO₂ in Mengen von über 40 Gew.% und Al₂O₃ in Mengen von 7 bis 10 Gew.%. CaO ist lediglich in Mengen von 10 bis 15 Gew.% üblicherweise vertreten. In Müllverbrennungsschlacken ist neben diesen erwähnten Bestandteilen zumeist auch ein mehr oder minder hoher Anteil von Nichteisenmetalloxiden sowie Fe₂O₃ in Mengen von etwa 10 Gew.% vorhanden. Derartige Müllverbrennungsschlacken sind aufgrund der genannten Mengenangaben für SiO₂ und CaO als saure Schlacken zu bezeichnen, welche beispielsweise den eingangs genannten stark basischen Stahlschlacken zur Erzielung einer synthetischen Hochofenschlacke beigemengt werden können. Da Müllverbrennungsschlacken in aller Regel nicht unmittelbar eingesetzt werden können, wurde bereits vorgeschlagen, Müllverbrennungsschlacken für ihre Verwendung bei der Mischzementherstellung nach der vollständigen Oxidation einer Reduktion zu unterwerfen, um insbesondere die zu hohen Anteile an Chrom, Zink, Nickel, Kupfer und teilweise auch zu hohe Eisenoxidanteile entsprechend zu reduzieren. Eine derartige, von Nichteisenmetallen befreite Schlacke stellt eine günstige Mischkomponente dar, mit welcher es gelinget stark basische Schlacken bevorzugt auf eine Basizität zwischen 1 und 1,5 einzustellen, bei welcher nach einem Sprühgranulieren und erforderlichenfalls einem Vermahlen Zementzuschlagstoffe gebildet werden können. Bei entsprechend hohem Anteil stark saurer oxidischer Schlacken steigt aber in der Regel auch der Alkaligehalt, welcher die Eignung des erzeugten Produktes als Zementzuschlagstoff deutlich beeinträchtigen kann. Der relativ hohe Alkaligehalt saurer Schlacken ist wiederum dafür verantwortlich, dass derartige saure Schlacken bei entsprechender Verfahrensführung zu Schlackenwolle versponnen werden können, sodass hier Isolierwolle hergestellt werden kann. Ein entsprechendes Verfahren, mit welchem aus Müllverbrennungsschlacken derartige Isolierwolle hergestellt wird, ist in der AT 405645 B bereits beschrieben worden. Das Problem der hohen Alkalianreicherung besteht jedoch auch bei gewissen hochbasischen Stoffen, wie beispielsweise Zementklinker-Ofen-Bypass-Stäuben. Hier entsteht die hohe Alkalianreicherung aufgrund interner Kreisläufe bei der Zementklinkerherstellung und stellt ein großes Problem für die Zementherstellung dar.

Die Erfindung zielt nun darauf ab bei der Herstellung von überaus feinkörnigem Granulat, welches sich unmittelbar für eine Reihe von Anwendungen, und insbesondere für Anwendungen in der Zementindustrie eignet, bei gleichzeitig großer Freiheit in der Wahl der entsprechenden Ausgangsmaterialien, den Anteil von Alkali und/oder Schwermetallen in den erstarrten Partikeln möglichst gering zu halten. Es soll somit neben der Möglichkeit ein breites Spektrum unterschiedlicher oxidischer Schmelzen durch Vermischen zu einem entsprechenden Ausgangsprodukt für die Schmelzgranulation vorzubereiten, die Möglichkeit geschaffen werden bei entsprechend hohen Alkali- und/oder Schwermetallgehalten der Ausgangsmischung diese im erzielbaren erstarrten Endprodukt entsprechend abzureichern.

Zur Lösung dieser Aufgabe besteht das erfindungsgemäße Verfahren der eingangs genannten Art im wesentlichen darin, dass die Temperatur der flüssigen Schmelzen am Austritt einer Sprühdüse wenigstens 50°C, vorzugsweise etwa 150°C über dem Liquidus-Temperatur-Bereich der zu versprühenden Schmelzen eingestellt wird und dass die im Anschluss an das Versprühen erstarrten Partikel einem mechanischen Trennverfahren zur Trennung von faserartigen und tropfen- bzw. kugelförmigen Strukturen unterworfen werden. Dadurch, dass mit entsprechend überhöhter Temperatur versprüht wird, kann das Abkühlungsverfahren in der Folge so gesteuert werden, dass je nach Verfahrensführung der Anteil fasriger Partikel im Verhältnis zum Anteil von tropfenförmigen und damit im wesentlichen kugelförmigen Partikeln eingestellt werden kann, wobei tropfenförmige und kugelförmige Strukturen vor allen Dingen bei den Partikeln mit hohem Schmelztemperaturbereich erzielt werden, wohin gegen die faserartig erstarrenden Teilchen sich durch einen entsprechend niedrigeren Schmelztemperaturbereich auszeichnen. Ein entsprechend niedriger Schmelzpunk ist in aller Regel auf glasartige Strukturen mit hohem Silikatgehalt zurückzuführen, wobei in derartigen glasartigen Strukturen mit hohem Silikatgehalt dann, wenn ein entsprechend niedriger Schmelzpunkt vorliegt, auch eine entsprechend höhere Menge an Alkalien enthalten ist, da es vor allen Dingen Alkalisilikate sind, welche einen entsprechend niedrigen Schmelzpunkt aufweisen und daher bevorzugt faserartig erstarren können. Auch Schwermetalle, wie beispielsweise V, Cr, Fe, Pb (seltene Erdmetalle) Cu, Ni in der Oxidform bilden niedrigschmelzende Silikate bzw. Eutektika und erstarren daher bei der Mikrogranulation ebenfalls faserartig. Um eine derartige Ausbildung faserartiger Strukturen zu begünstigen genügt es eine entsprechende Temperaturführung sicherzustellen, bei welcher die in der Folge faserartig erstarrenden Strukturen möglichst lang auf Temperaturen über ihrem Schmelzpunkt gehalten werden, um die Ausbildung entsprechender Fasern zu begünstigen, wobei bei entsprechender Wahl des Grenzbereiches zwischen einer rascheren und einer langsameren Abkühlung jeweils auch ein entsprechend höherer Anteil an kugelförmigen Strukturen erzielt werden kann, wenn vor dem Erstarren der faserartigen Struktur eine entsprechende Haltezeit eingeführt wird. Mit der entsprechenden Verdüsung und einem langsamen Abkühlen mit hohem Schergradienten auf eine erste Grenztemperatur, bei welcher faserartige Strukturen in aller Regel noch flüssig oder teigig vorliegen, die kugeligen Teilchen aufgrund ihres höheren Schmelztemperaturbereiches hingegen bereits fest sind, können Partikeldurchmesser von unter 30 µm bei den kugelförmigen Strukturen erreicht werden, wonach derartige Partikel mit kugelförmiger Struktur auch nicht weiter vermahlen werden müssen, um unmittelbar eingesetzt werden zu können. Zur Abtrennung der alkalireicheren bzw. schwermetallreichen Fraktion, welche faserartig erstarrt, genügt es in der Folge ein einfaches mechanisches Trennverfahren anzuwenden, wobei das erfindungsgemäße Verfahren bevorzugt so durchgeführt wird, dass das Trennverfahren als Siebung oder Sichtung durchgeführt wird.

Um sicherzustellen, dass für die gewünschte selektive Erstarrung zu faserartigen und tropfen- bzw. kugelförmigen Strukturen auch die entsprechende Zeit zur Verfügung steht, ist es von Vorteil mit entsprechend überhöhten Temperaturen eines Treibmediums zu arbeiten, um auch entsprechend hohe Schlackentemperaturen zu gewährleisten. Das Verfahren kann hierzu so durchgeführt werden, dass zum Ausstoß der flüssigen Schmelzen und zum Überhitzen der flüssigen Schmelzen Heißgas mit Temperaturen von über 1500°C, insbesondere 1500 - 1800°C, eingesetzt wird. Prinzipiell reichen zur Durchführung des Verfahrens aber auch Temperaturen zwischen 600°C und 800°C aus.

Zur Einstellung des Anteiles an tropfen- bzw. kugelförmigen Strukturen wird bevorzugt so vorgegangen, dass die versprühten Schmelzetröpfchen in einer ersten Abkühl- und Erstarrungsphase langsam auf Temperaturen zwischen 1350°C und 1050°C gekühlt und anschließend rascher gekühlt werden, wobei sich gezeigt hat, dass hier bevorzugt Calciumsilikate bei entsprechend höheren Temperaturen einfrieren und zu überaus feinkörnigen tropfen- bzw. kugelförmigen Strukturen erstarren, wo hingegen Alkalisilikate noch flüssig oder in relativ niedrigviskoser, teigiger Konsistenz vorliegen, welche die weitere Ausbildung von faserartigen Strukturen begünstigt. Die rasche Abkühlung zur Ausbildung der faserartigen Strukturen führt hierbei zu einer Verglasung des hochbasischen Anteiles. Um eine entsprechende Ausbildung von leicht mechanisch abtrennbaren Fasern zu ermöglichen, wird in der Folge bevorzugt so vorgegangen, dass sich der Temperaturbereich der gegenüber der ersten Abkühlung höheren Kühlgeschwindigkeit zwischen 900°C und 1200°C, insbesondere 930°C und 1150°C, erstreckt.

Zur Erreichung einer hohen Differenzierung zwischen faserartig und kugel- bzw. tropfenförmig erstarrenden Strukturen hat sich auch die Wahl der Geschwindigkeit, mit welcher das Treibgas zur Zerstäubung bzw. Versprühung der Schmelzen eingestoßen wird, als entscheidend herausgestellt. Ein besonders hoher Geschwindigkeitsgradient zwischen dem gerichteten Treibgasstrahl und der auslaufenden Schmelze führt hierbei zu hohen Scherspannungen und daher zu einer überaus hohen Differenzierung in der Ausbildung von faserartigen und tröpfchen- bzw. kugelförmigen Strukturen.

Insgesamt eignet sich das erfindungsgemäße Verfahren bevorzugt für Schlacken mit einer Basizität CaO/SiO₂, welche zwischen 0,9 und 1,6 eingestellt wurde, sodass stark fadenbildende Schlacken mit Basizitäten unter 0,7 mit relativ quantitativ tropfen- bzw. kugelförmig erstarrenden Schlacken und hoher Basizität entsprechend vermischt werden können und eine entsprechende Verschiebung des Alkaligehaltes in den in der Folge gebildeten Fraktionen erzielt wird. Es werden somit bevorzugt sauren Müllverbrennungsschlacken basische Schlacken zur Einstellung der Basizität zugesetzt.

Insgesamt gelingt es durch das erfindungsgemäße Verfahren thermochemisch eine Abreicherung von Alkalien und/oder Schwermetallen aus oxidischen Schlackengemischen bzw. oxidischen Schmelzen zu erzielen, welche mit geringem aparativen Aufbau unter Einsatz konventioneller Einrichtungen für das Verdüsen und Granulieren von Schlacken durchgeführt werden kann.

## Patentansprüche

1. Verfahren zur Abreicherung von Alkalien und/oder Schwermetallen in oxidischen Schmelzen, bei welchen die Schmelzen, wie z.B. schmelzflüssige Müllverbrennungsschlacken, Stahlschlacken und/oder Hochofenschlacken versprüht und anschließend gekühlt werden, **dadurch gekennzeichnet, dass** die Temperatur der flüssigen Schmelzen am Austritt einer Sprühdüse wenigstens 50°C, vorzugsweise etwa 150°C über dem Liquidus-Temperatur-Bereich der zu versprühenden Schmelzen eingestellt wird und dass die im Anschluss an das Versprühen erstarrten Partikel einem mechanischen Trennverfahren zur Trennung von faserartigen und tropfen- bzw. kugelförmigen Strukturen unterworfen werden.

2. Verfahren nach Anspruch 1, **dadurch gekennzeichnet, dass** das Trennverfahren als Siebung oder Sichtung durchgeführt wird.

3. Verfahren nach Anspruch 1 oder 2, **dadurch gekennzeichnet, dass** zum Ausstoß der flüssigen Schmelzen und zum Überhitzen der flüssigen Schmelzen Heißgas mit Temperaturen von über 1500°C, insbesondere 1500 - 1800°C, eingesetzt wird.

4. Verfahren nach Anspruch 1, 2 oder 3, **dadurch gekennzeichnet, dass** die versprühten Schmelzetröpfchen in einer ersten Abkühlund Erstarrungsphase langsam auf Temperaturen zwischen 1350°C und 1050°C gekühlt und anschließend rascher gekühlt werden.

5. Verfahren nach Anspruch 1 bis 4, **dadurch gekennzeichnet, dass** sich der Temperaturbereich der gegenüber der ersten Abkühlung höheren Kühlgeschwindigkeit zwischen 900°C und 1200°C, insbesondere 930°C und 1150°C, erstreckt.

6. Verfahren nach Anspruch 1 bis 5, **dadurch gekennzeichnet, dass** die Basizität CaO/SiO₂ der Schmelze auf 0,9 bis 1,6 eingestellt wird.

7. Verfahren nach Anspruch 1 bis 5, **dadurch gekennzeichnet, dass** saure Müllverbrennungsschlacken basischen Schlacken zur Einstellung der Basizität zugesetzt werden.
